Europäisches Patentamt

European Patent Office

Office européen des brevets

(19)

(11) Veröffentlichungsnummer: **0 274 068**
**A2**

## EUROPÄISCHE PATENTANMELDUNG

(21) Anmeldenummer: 87118126.9

(22) Anmeldetag: 08.12.87

(51) Int. Cl.⁴: **C08K 3/22** , C08K 3/34 , C08K 3/00 , C08G 18/38 , C08G 18/40 , C08G 18/08 , C09D 5/18

(30) Priorität: 29.12.86 DE 3643708

(43) Veröffentlichungstag der Anmeldung: 13.07.88 Patentblatt 88/28

(84) Benannte Vertragsstaaten: BE CH DE FR GB LI NL

(71) Anmelder: BAYER AG
Konzernverwaltung RP Patentabteilung
D-5090 Leverkusen 1 Bayerwerk(DE)

(72) Erfinder: Von Bonin, Wulf, Dr.
Mendelssohnstrasse 30
D-5090 Leverkusen(DE)

(54) Intumeszenzmassen und ihre Verwendung.

(57) Die erfindungsgemäßen Intumeszenzmassen sind Reaktionsgemische, die beim Vermischen und Umsetzen folgender Komponenten erhalten werden:
- A) spezieller Polyetherpolyole,
- B spezieller Polyetherpolyole,
- C) spezieller phosphorhaltiger Polyole,
- D) inerter Trockenmittel,
- E) dehydratisierbarer Füllstoffe,
- F) sonstiger anorganischer Hilfs-und Füllstoffe,
- G) Katalystoren und
- H) Polyisocyanaten.

EP 0 274 068 A2

## Intumeszenzmassen und ihre Verwendung

Die Erfindung betrifft neue, treibmittelfreie Intumeszenzmassen auf Polyurethan-Basis mit verbesserten brandtechnischen Eigenschaften und die Verwendung dieser Massen als Beschichtungsmaterialien und zur Herstellung von Formkörpern mit einer Schutzwirkung gegen Feuer und Hitze.

Unter Intumeszenzmassen werden solche Massen verstanden, die bei der Einwirkung von Feuer und Hitze aufschäumen und dabei einen isolierenden und feuerabweisenden Schaum ausbilden, der die unter dem Schaum liegenden Bezirke vor der Feuereinwirkung schützt. Intumeszenzmassen auf Polyurethanbasis, d.h. auf Basis von Umsetzungsprodukten von Polyisocyanaten und solchen Verbindungen, die gegenüber Isocyanatgruppen reaktionsfähige Wasserstoffatome aufweisen, z.B. Polyetherolen oder Polyesterolen, sind bekannt (siehe z.B. die DE-OS 30 25 217, 30 41 731, 30 25 309, 31 09 352, 32 35 571, 33 02 417, 33 06 698, 34 11 327). Bei diesen bekannten Intumeszenzmassen auf Polyurethanbasis handelt es sich um Reaktionsgemische, für deren Herstellung außer Umsetzungsprodukten von Polyisocyanaten mit phosphorhaltigen Polyolen und gegebenenfalls phosphorfreien Polyether-oder Polyesterpolyolen auch noch - als Treibmittel - Derivate oder Salze der Cyanursäure und/oder des Melamins oder von aromatischen Hydroxycarbonsäuren verwendet werden.

Diese bekannten Reaktionsgemische zeichnen sich durch hervorragende Intumeszenzeigenschaften und ein gutes flammwidriges Verhalten aus. Es hat sich jedoch gezeigt, daß die Brandschutzwirkung dieser bekannten Reaktionsgemische unter besonders schwierigen Bedingungen noch nicht ausreicht, z.B. unter den Bedingungen eines Kohlenwasserstoffbrandes, bei dem die Gegenstände gleichzeitig den Einflüssen hoher Temperaturen (1000° C und darüber) und der Flammerosionswirkung des Feuers für Branddauern von 30 bis 120 Minuten ausgesetzt sind.

Überraschenderweise wurde gefunden, daß man Intumeszenzmassen mit einer gegenüber Treibmittel enthaltenden Intumeszenzmassen wesentlich verbesserten Brandschutzwirkung erhält, wenn man zur Herstellung des Reaktionsgemisches keine Treibmittel wie die Derivate oder Salze der Cyanursäure und/oder des Melamins oder aromatischer Hydroxycarbonsäuren verwendet, sondern stattdessen durch Auswahl geeigneter Komponenten für das Polyisocyanat-Polyol-Umsetzungsprodukt und geeigneter anorganischer Mischungskomponenten dafür sorgt, daß eine weitgehend porenfreie Intumeszenzmasse entsteht. Überraschenderweise wurde nämlich zusätzlich gefunden, daß die Schutzwirkung der Intumeszenzmassen umso größer ist, je geringer ihre Porosität ist. Es wurde gefunden, daß entgegen der Annahme, daß die Schutzwirkung mit zunehmender Porosität ( = abnehmender Wärmeleitfähigkeit) der Intumeszenzmassen zunimmt, die Schutzwirkung überraschenderweise mit abnehmender Porosität der Intumeszenzmassen zunimmt. Es wurde weiterhin gefunden, daß mit bestimmten Kombinationen von Polyetherpolyolen und Polyesterpolyolen Intumeszenzmassen mit besonders verbessertem Intumeszenzverhalten erhalten werden.

Mit den erfindungsgemäßen, treibmittelfreien Reaktionsgemischen aus Umsetzungsprodukten von Polyisocyanaten mit phosphorhaltigen und phosphorfreien Polyolen und anorganischen Zusatzstoffen werden Intumeszenzmassen erhalten, die eine wesentlich verbesserte Brandschutzwirkung unter Bedingungen des Kohlenwasserstoffbrandes aufweisen. Bei Beflammung bilden sie einen weitgehend rißfreien, festen, feinporigen, widerstandsfähigen Intumeszenzschaum, der sich durch eine sehr gute Isolierwirkung und eine hohe Flammenerosionsbeständigkeit auszeichnet. Die in der Intumeszenzmasse enthaltenen wasserhaltigen Füllstoffe sind in diesem Schaum in dehydratisierter Form eingebaut. In diesem tragen sie zum Teil durch Keramisierung zur Ausbildung einer oxidationsstabilen, relativ festen Schutzschicht für die beschichteten oder zu schützenden Substrate, z.B. Stahlträger, Öl-oder Gastanks, Rohrleitungen u.s.w. bei.

Außer der wesentlich verbesserten Schutzwirkung gegen Feuer und Hitze weisen die erfindungsgemäßen Intumeszenzmassen den wichtigen weiteren Vorteil auf, daß sie nur noch Polymere und wasserunlösliche anorganische Bestandteile enthalten und deshalb in hohem Maße wasser-und wetterfest sind.

Die Erfindung betrifft daher neue, treibmittelfreie, Intumeszenzmassen auf Basis von Umsetzungsprodukten von phosphorhaltigen und phosphorfreien Polyolen und Polyisocyanaten, die dadurch gekennzeichnet sind, daß sie ein beim Vermischen und Umsetzen folgender Komponenten entstehendes Reaktionsgemisch sind, aus:

A) 5 bis 25 Gew.-%, vorzugsweise 7 bis 17 Gew.-%, bezogen auf das Gesamtgewicht der Komponenten A bis G, eines Polyetherpolyols mit mindestens 1,75 OH-Gruppen je Molekül und einer OH-Zahl von 150 bis 400;

B) 5 bis 25 Gew.-%, vorzugsweise 7 bis 17 Gew.-%, bezogen auf das Gesamtgewicht der Komponenten A bis G, eines Polyetherpolyols mit mindestens 2 OH-Gruppen je Molekül und einer OH-Zahl von 150 bis 400;

2

C) 5 bis 25 Gew.-%, vorzugsweise 7 bis 17 Gew.-%, bezogen auf das Gesamtgewicht der Komponenten A bis G, eines mindestens zwei OH-Gruppen je Molekül enthaltenden, phosphorhaltigen Polyols, dessen Phosphorgehalt zwischen 6 und 21 Gew.-%, vorzugsweise zwischen 10 und 15 Gew.-% liegt, mit der Maßgabe, daß das Gesamtgewicht der Komponenten A + B + C 15 bis 70 Gew.-%, vorzugsweise 30 bis 45 Gew.-% des Gesamtgewichts des Reaktionsgemisches ausmacht;

D) 0 bis 10 Gew.-%, vorzugweise 0,5 bis 5 Gew.-%, bezogen auf das Gesamtgewicht der Komponenten A bis G, eines inerten Trockenmittels;

E) 20 bis 85 Gew.-%, vorzugsweise 40 bis 55 Gew.-%, bezogen auf das Gesamtgewicht des Reaktionsgemisches, eines dehydratisierbaren Füllstoffs;

F) 0 bis 30 Gew.-%, vorzugsweise 0 bis 12 Gew.-%, bezogen auf das Gesamtgewicht des Reaktionsgemisches, sonstiger anorganischer Hilfs-und Füllstoffe, mit der Maßgabe, daß das Gesamtgewicht der Komponenten D + E + F 20 bis 90 Gew.-%, vorzugsweise 45 bis 70 Gew.-%, bezogen auf das Gesamtgewicht des Reaktionsgemisches beträgt; und

G) 0 bis 3 Gew.-%, vorzugsweise 0 bis 1,5 Gew.-%, bezogen auf das Gesamtgewicht der Komponenten A + B + C, eines Katalysators; und

H) 70 bis 130 Gew.-%, vorzugsweise 95 bis 115 Gew.-%, bezogen auf die zur Umsetzung der im Gemisch der Komponenten A, B und C enthaltenen aktiven Wasserstoffatome stöchiometrisch erforderliche Menge, eines Polyisocyanates.

Der Anteil der Komponenten C am Gesamtgewicht der Komponenten A + B + C beträgt im allgemeinen 10 bis 65 Gew.-%, vorzugsweise 20 bis 50 Gew.-%.

Als Komponente A) werden vorzugsweise solche Polyetherpolyole eingesetzt, die durchschnittlich 1,75 bis 6 OH-Gruppen je Molekül enthalten und eine OH-Zahl von 150 bis 300 aufweisen und in denen der Anteil der Ethylenoxideinheiten im Molekül mehr als 65 Gew.-% beträgt.

Als Komponente B) werden vorzugsweise Polyesterpolyole auf Adipinsäurebasis eingesetzt, die durchschnittlich ca. 1,75 bis 6 OH-Gruppen je Molekül enthalten und OH-Zahlen von 120 bis 400 aufweisen.

Als Komponente C) werden vorzugsweise phosphorhaltige Kondensationsprodukte der Formel

$$(RO)_2PO\text{-}CH_2\text{-}N(CHX\text{-}CHX_1\text{-}OH)_2 \qquad (1)$$

eingesetzt, in der

R für $C_1$-$C_8$-Alkyl oder $C_1$-$C_8$-Hydroxyalkyl und

X und $X_1$ unabhängig voneinander für Wasserstoff oder Methyl stehen.

Vorzugsweise stehen in Formel (1) R für Ethyl oder Hydroxyethyl und X und $X_1$ für Wasserstoff.

Als Komponente D) werden vorzugsweise zum Binden von Wasser beföhigte Mineralien, insbesondere synthetische Silikate vom Zeolithtyp eingesetzt.

Als Komponente E) werden vorzugsweise Aluminiumhydroxide bzw. Oxydhydrate verwendet, die eine Korngröße >5 $\mu$ und/oder eine BET-Oberfläche <5 $m^2/g$ aufweisen.

Als Komponente F) werden vorzugsweise Sedimentationsverhinderer, insbesondere Kieselsäuren, Silikate und/oder Farbpigmente auf anorganischer Basis und/oder organische insbesondere aber zur Keramisierung bei Beflammung beitragende anorganische Füllstoffe verwendet.

Als Komponente G) werden vorzugsweise in der Polyurethanchemie bekannte basische Katalysatoren, besonders metallorganische, besonders bevorzugt zinnorganische Katalysatoren verwendet.

Als Komponente H) werden vorzugsweise technische aromatische Polyisocyanate vom Diisocyanatodiphenylmethan (MDI)-Typ, wie sie bei der Phosgenierung von Anilin-Formaldehyd-Kondensationsprodukten erhalten werden, eingesetzt.

Als Vertreter der als Komponente A) zu verwendenden Polyetherpolyole seien beispielsweise die durch Anlagerung von Alkylenoxiden, die zu 50 bis 100 Gew.-% aus Ethylenoxid bestehen, an Zerewitinoff-aktive niedermolekulare Starter erhaltenen Alkoxylierungsprodukte genannt. Vorzugsweise werden als Polyetherpolyole Ethylenoxidanlagerungsprodukte verwendet; es ist jedoch auch möglich bis zu 50, vorzugsweise bis zu 35 Gew.-% des Ethylenoxids durch Propylenoxid oder andere Alkylenoxide zu ersetzen.

Die erfindungsgemäß zu verwendenden Polyetherpolyole und ihre Herstellung sind prinzipiell bekannt.

Als niedermolekulare Startermoleküle kommen für die Herstellung der erfindungsgemäß zu verwendenden Polyether polyole A) an sich bekannte Verbindungen in Frage, z.B. Wasser, Ethylenglykol, Propylenglykol, Butandiol, Trimethylolpropan, Glyzerin, Triethanolamin, Pentaerythrit, Ethylendiamin, Toluylendiamine, die verschiedensten Zucker und deren Hydrierungsprodukte, Formosen und Formite, Anilin, Polyalkylenpolyamine, Benzidine bzw. deren Hydrierungsprodukte. Auch aliphatische und aromatische Polycarbonsäuren sind als Starter in Betracht zu ziehen, auch Aminosäuren oder Aminoalkohole wie Ethanolamin, oder Polyamine wie Ethylendiamin oder Diethylentriamin. Es können auch halogenhaltige Starter wie bromierte Alkohole, etwa Bisbrommethyl-propandiol Verwendung finden. In Betracht kommen prinzipiell auch andere als die genannten Polyether z.B. Polythioether, Hydroxyether-Endgruppen enthaltende Polyacetale, Polycarbonate und Polyesteramide, wie sie für die Herstellung von homogenen und von zellförmigen Polyurethanen an sich bekannt sind.

Auch Sucrosepolyether, wie sie z.B. in den DE-Auslegeschriften 1 176 358 und 1 064 938 beschrieben werden, sowie auf Formit oder Formose gestartete Polyether (DE-Offenlegungsschriften 2 639 083 bzw. 2 737 951), kommen als Starter in Frage.

Als Vertreter der als Komponente B) zu verwendenden Polyesterpolyole seien beispielsweise genannt: Hydroxylgruppen aufweisende Polyester, die eine OH-Zahl von 100 bis 400 aufweisen und die durch Umsetzung von 2 bis 10 C-Atome aufweisenden aliphatischen, cycloaliphatischen, araliphatischen und aromatischen Polycarbonsäuren mit mindestens zwei Polyolen aus zwei verschiedenen der drei folgenden Gruppen

a) mehr als drei OH-Gruppen aufweisende Hydroxylverbindungen vom Molekulargewicht bis 200,

b) drei OH-Gruppen aufweisende Hydroxylverbindungen vom Molekulargewicht bis 150,

c) zwei OH-Gruppen aufweisende Hydroxylverbindungen vom Molekulargewicht bis 110, bei Einhaltung der Maßgabe erhalten werden, daß ein Polyol der Gruppe a) angehören muß.

Als Polycarbonsäuren kommen vor allem die für die Herstellung von Polyesterpolyolen üblicherweise verwendeten Carbonsäuren in Betracht; es sind dies außer den Benzoldicarbonsäuren vor allem aliphatische Polycarbonsäuren mit 3 bis 10 C-Atomen.

Als Benzoldicarbonsäuren seien z.B. Phthalsäure und Terephthalsäure genannt; als aliphatische Polycarbonsäuren werden insbesondere solche mit 3 bis 8 C-Atomen wie Zitronensäure, Weinsäure, Oxalsäure, Malein-und Fumarsäure, Bernsteinsäure verwendet. Wegen der guten Zugänglichkeit ist Adipinsäure bevorzugt.

Als Hydroxylverbindungen der Gruppe a) kommen Zuckerpolyole wie Mannit, Sorbit, Xylit und Formit in Betracht; bevorzugt wird Pentaerythrit verwendet.

Als Hydroxylverbindungen der Gruppe b) ist Glycerin bevorzugt, in Betracht zu ziehen sind aber auch z.B. Trimethylolpropan oder Triethanolamin.

Als Hydroxylverbindungen der Gruppe c) ist neben Propylenglykol, verschiedenen Butandiolen oder Neopentylglykol bevorzugt Ethylenglykol zu nennen.

Erfindungsgemäß werden hochverzweigte Polyester aus Adipinsäure, Pentaerythrit, Glycerin und Ethylenglykol besonders bevorzugt eingesetzt.

Die Polyester besitzen bei 75° C Viskositäten um 300 bis 8000 cP, bevorzugt werden Viskositäten von 400 bis 5000 cP bei 75° C. Die Säurezahlen sollen unter 10 liegen, vorzugsweise zwischen 0 und 5. Die Molekulargewichte liegen um 500 bis 2000, vorzugsweise bei 600 bis 1500, die OH-Zahlen bei 100 bis 400, vorzugsweise 120 bis 300.

Prinzipiell kommen auch sonstige übliche Hydroxylgruppen aufweisende Polyester in Betracht z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen Carbonsäuren. Anstelle der freien Polycarbonsäuren können auch die entsprechenden Polycarbonsäureanhydride oder entsprechend Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:
Bernsteinsäure, Adipinsäure, Korksäure, Azelainsäure, Sebacinsäure, Phthalsäure, Isophthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropen, Hexantriol-(1,2,6), Butantriol-(1,2,4), Trimethylolethan, Pentaerythrit, Chinit, Mannit und Sorbit, Formit, Methylglykosid, ferner Diethylenglykol, Triethylenglykol, Tetraethylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

Vertreter der genannten erfindungsgemäß zu verwendenden Verbindungen A) oder B) sind z.B. in High Polymers, Vol. XVI, "Polyurethanes, Chemistry and Technology", verfaßt von Saunders-Frisch, Interscience Publishers, New York, London, Band 1, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben.

Als Komponenten A) und B) können auch Gemische verschiedener Polyetherpolyole bzw. Polyesterpolyole verwendet werden, sofern diese Gemische die geforderte Funktionalität und OH-Zahl aufweisen.

Als Vertreter der Komponente C) seien beispielsweise Kondensationsprodukte von primären oder sekundären aliphatische, cycloaliphatischen, aromatischen, araliphatischen oder heterocyclischen Mono- und/oder Polyaminen mit Carbonylverbindungen und Dialkylphosphiten genannt. Solche Kondensationsprodukte können gegebenenfalls zusätzlich oxyalkyliert sein (siehe z.B. DE-PS 1 143 022, US-PS 3 076 010, DE-AS 1 803 747 und DE-AS 1 928 265).

Bevorzugt eingesetzt werden die phosphorhaltigen Kondensationsprodukte der Formel (1).

Ferner kommen in Betracht: sonstige Phosphoratome enthaltende Polyole, z.B. Hydroxylgruppen enthaltende

-Ester von phosphorhaltigen Säuren, wie Phosphorsäuren der verschiedenen Kondensationsgrade bis zur Metaphosphorsäure, oder von Phosphonsäuren, Phosphinsäuren bzw. deren Alkoxylierungsprodukte und/oder Umsetzungsprodukte,

- Salze aus Hydroxylgruppen enthaltenden Aminen und den verschiedenen Phosphorsäuren, bzw.

- Amide der verschiedenen Phosphorsäuren, die Hydroxylgruppen enthalten.

Da sich gezeigt hat, daß in Bezug auf die Abschirmwirkung bei Beflammung, die Beschichtungsmaterialien die besten Ergebnisse liefern, die möglichst wenig porös sind und Porosität auch theoretisch aufgrund der Möglichkeit Raum für Feuchtigkeitseinschlüsse zu bieten, vermieden werden sollte, ist es zweckmäßig immer dann, wenn man möglichst massive erfindungsgemäße Beschichtungen und nicht etwa poröse bzw. schaumstoffartige erzeugen möchte, feuchtigkeitsfrei zu arbeiten.

Da nahezu sämtliche Rezepturbestandteile wie Polyole oder Füllstoffe absorbierte Feuchtigkeit aufweisen, bzw. eine gewisse Hygroskopizität besitzen muß stets mit der Anwesenheit von Feuchtigkeit gerechnet werden. Deshalb hat es sich als vorteilhaft erwiesen, Komponente D zuzusetzen.

Als Vertreter der Komponente D) seien beispielsweise dehydratisierte Minerale, wie Kieselsäuregele, Gips, oder Zemente genannt. Vorzugsweise werden jedoch als Trockenmittel sogenannte Zeolithe in dehydratisierter Form eingesetzt. Bei den Zeolithen handelt es sich vorzugsweise um Calcium-Aluminiumsilikate, die Wasser in ihrer Gitterstruktur einlagern können. Es können jedoch auch solche Trockenmittel eingesetzt werden, die Wasser durch chemische Reaktion binden, z.B. Phosphorpentoxid, Tosylisocyanate, Carbide oder Säureanhydride.

Als Komponente E) werden vorzugsweise Aluminiumhydroxid, Aluminiumoxidhydrate oder teilhydratisierte Aluminiumhydroxide verwendet. Es kommen aber auch andere, bei der Beflammung wasserabgebende anorganische Hydroxide oder Hydrate in Betracht, z.B. Borsäure und deren teilentwässerte Derivate, ferner $CaO.Al_2O_3.10$ $H_2O$ (Nesquehonit), $MgCO_3.3H_2O$ (Wermlandit), $Ca_2Mg_{14}(Al,Fe)_4CO_3(OH)_{42}.29H_2O$ (Thaumasit), $Ca_3Si(OH)_6(SO_4)(CO_3).12$ $H_2O$ (Artinit), $Mg_2(OH)_2CO_3.$ $H_2O$ (Ettringit), 3 $CaO.Al_2O_3.3$ $CaSO_4.32$ $H_2O$ (Hydromagnesit), $Mg_5(OH)_2(CO_3)_4.4$ $H_2O$ (Hydrocalumit), $Ca_4Al_2(OH)_{14}.6$ $H_2O$ (Hydrotalkit), $Mg_6Al_2(OH)_{16}CO_3.4$ $H_2O$ Alumohydrocalcit, $CaAl_2(OH)_4(CO_3)_2.3$ $H_2O$ Scarbroit, $Al_{14}(CO_3)_3(OH)_{36}$ Hydrogranat, 3 $CaO.Al_2O_3.6$ $H_2O$ Dawsonit, $NaAl(OH)CO_3$, $CaSO_4.2$ $H_2O$ Gips, wasserhaltige Zeolithe, Vermikulite, Zinkborat, Colemanit, Perlite, Glimmer, Alkalisilikate, Borax, modifizierte Kohlen und Graphite, Kieselsäuren.

Als Komponente F), die die erfindungsgemäßen Intumeszenzmassen zusätzlich zu den Komponenten A) bis E) als Füllstoffe enthalten können seien z.B. genannt: Aluminiumoxid und Oxide des Bors, Eisens, Zinks, Kohle, Graphit, Koks, Calciumsilikat, Borate und Phosphate bzw. Polyphosphate von Ca, Al, Zn, Mg, Fe, Kaolin, Kreide, Glas, insbesondere in Kugel-, Pulver-, Schuppenoder Faserform, Gesteinsmehl, Wollastonit, Dolomit, Alumosilikate, Gips, Talkum, Asbest, Steinwolle, Zement, Holzmehl, Metallpulver oder -fasern, wie Pb; Al; Ag; Fe; Zn; Cu; Nitride, Carbide z.B. von Bor oder Wolfram.

Bei den Hilfsstoffen (F) kann es sich allgemein um natürliche oder synthetische, anorganische oder organische Mineralien handeln, die massiv, porös, hohl, kristallin, amorph, pulvrig, plättchenförmig, stäbchenförmig, kugelig oder faserförmig sein und gegebenenfalls auch Anteile von Kristall-oder Hydratwasser enthalten können.

Als Hilfsstoffe F) kommen außer den üblichen Füllstoffen auch Flußmittel, Sedimentationsverzögerer, Thixotropiemittel und Fließmodifikatoren in Betracht. Besonders gut geeignet sind feinteilige, insbesondere pyrogene Kieselsäuren, Ruße oder auch Calciumsilikate wie Xonothlith.

Die Funktionen der Komponente F) können vielfach auch von den Komponenten D) und E) übernommen werden; dies ist insbesondere dann der Fall, wenn es sich bei den Komponenten D) und E) um entsprechend farbstarke, kristalline oder schmelzbare oder feinteilige Trockenmittel bzw. Füllstoffe handelt.

Als Hilfsstoffe F) kommen ferner anorganische Farbpigmente wie etwa Eisenoxid-oder Titanoxid-Pigmente, Metallpulverpigmente, Graphit und ähnliche in Betracht. Ferner können als Hilfsstoffe Tenside, Konservierungsmittel, Licht-und Bewitterungsschutzmittel, Duftstoffe, Biocide, Hydrophobiermittel z.B. auf Silicon-oder Fluorkohlenwasserstoff-Basis, weiterhin Gleitmittel, wie Teflonpulver oder Molybdänsulfide zugesetzt werden.

Auch Verbindungen wie (Poly)Epoxide, wie sie z.B. in DE-OS 33 03 702, aufgeführt sind, Lösungsmittel oder Flammschutzmittel, etwa übliche Ester der Phosphorsäure oder der Methyl-bzw. Phenyl-Phosphorsäure kommen gegebenenfalls in Betracht, obgleich derartige Zusätze für den Erfindungsgegenstand nicht essentiell sind.

Als Katalysatoren G) kommen vorzugsweise solche in Betracht, die wie tert. Amine die Umsetzung von Isocyanatgruppen mit den funktionellen Gruppen der Komponenten A), B) und C) beschleunigen. Es können aber auch solche Katalysatoren zugesetzt werden, die die Carbonisierung der organischen Bestandteile der Intumeszenzmassen fördern, oder die Rauchgasentwicklung herabsetzen. Solche Katalysatoren sind z.B. Spender von schwerflüchtigen Säuren und/oder Verbindungen mit Metallen mit leichtem Wertigkeitswechsel wie Kupfer, Mangan, Titan, Vanadin, Eisen, Kobalt, Nickel, Ruthenium, Osmium, Chrom, Wolfram und Uran.

Vorzugsweise werden jedoch als Katalysatoren organische Metallverbindungen z.B. Metallalkylcarboxylate des Zinns, Bleis oder Cers wie etwa Zinnoctoat oder Dibutylzinndilaurat, Natrium-oder Kaliumacetat, aber auch Trimerisierungskatalysatoren und Carbodiimidisierungskatalysatoren wie Pholpholinoxide, Alkali-Käfigverbindungen und tertiäre Amine verwendet.

Als Komponente H) kommen dei aus der Polyurethanchemie bekannten Isocyanate in Frage. Beispielsweise eignen sich aliphatische, cycloaliphatische, araliphatische, aromatische und heterocyclische Polyisocyanate, wie sie z.B. von S. Siefken in Justus Liebigs Annalen der Chemie, 562, 75 bis 136, beschrieben werden, insbesondere solche der Formel (2)

$$Q(NCO)_m \qquad (2)$$

in der

m für eine Zahl von 2 bis 4, vorzugsweise für 2,0 bis 3,0 und Q für einen aliphatischen Kohlenwasserstoffrest mit 2 bis 18, vorzugsweise 6 bis 10 C-Atomen, für einen cycloaliphatischen Kohlenwasserstoffrest mit 4 bis 15, vorzugsweise 6 bis 13 C-Atomen oder für einen araliphatischen Kohlenwasserstoffrest mit 8 bis 15, vorzugsweise 8 bis 13 C-Atomen steht.

Beispiele für Polyisocyanate der Formel (2) sind:

Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3-und -1,4-diisocyanat, sowie beliebige Gemische dieser Isomeren, 1-Isocyanato-3,3,5-trimethyl-5-isocyanatomethyl-cyclohexan (siehe DE-AS 1 202 785 und US-PS 3 401 190), 2,4-und 2,6-Hexahydrotoluylendiisocyanat, sowie beliebige Gemische dieser Isomeren, Hexahydro-1,3-und/oder -4,4-diphenylmethandiisocyanat, 1,3-und 1,4-Phenylendiisocyanat, 2,4-und 2,6-Toluylendiisocyanat, sowie beliebige Gemische dieser Isomeren, Diphenylmethan-2,4-und/oder -4,4-diisocyanat, sowie deren mehrkernige höherfunktionelle Derivate und Naphthylen-1,5-diisocyanat.

Ferner kommen beispielsweise in Frage: Triphenylmethan-1,4',4''-triisocyanat, Polyphenyl-polymethylen-polyisoisocyanate, wie sie durch Anilin-Formaldehyd-Kondensation und anschließende Phosgenierung erhalten werden (siehe GB-PS 874 430 und 848 671), m-und p-Isocyanatophenylsulfonyl-isocyanate (siehe US-PS 3 454 606), perchlorierte Arylpolyisocyanate (siehe DE-AS 1 157 601 = US-PS 3 277 138), Carbodiimidgruppen aufweisende Polyisocyanate (siehe DE-PS 1 092 007 = US-PS 3 152 162, DE-OS 2 504 400, 2 537 685 und 2 552 250), Norbornandiisocyanate (siehe US-PS 3 492 330), Allophanatgruppen aufweisende Polyisocyanate (siehe GB-PS 994 890, DE-PS 761 626 und NL-PS 7 102 524), Isocyanuratgruppen aufweisende Polyisocyanate (siehe US-PS 3 001 973 und DE-PS 1 022 789, 1 222 067 und 1 027 394 und DE-OS 1 929 034 und 2 004 048), Urethangruppen aufweisende Polyisocyanate (siehe DE-PS 752 261 oder US-PS 3 394 164 und 3 644 457), acylierte Harnstoffgruppen aufweisende Polyisocyanate (siehe DE-PS 1 230 778), Biuretgruppen aufweisende Polyisocyanate (siehe US-PS 3 124 605, 3 201 372 und 3 124 605 und GB-PS 889 050), durch Telomerisationsreaktionen hergestellte Polyisocyanate (siehe US-PS 3 654 106), Estergruppen aufweisende Polyisocyanate (siehe GB-PS 965 474 und 1 072 956, US-PS 3 567 763 und DE-PS 1 231 688), Umsetzungsprodukte der obengenannten Isocyanate mit Acetalen (siehe DE-PS 1 072 385) und polymere Fettsäureester enthaltende Polyisocyanate (siehe US-PS 3 455 883).

Es ist auch möglich, die bei der technischen Isocyanatherstellung anfallenden, Isocyanatgruppen aufweisenden Destillationsrückstände, gegebenenfalls gelöst, in einem oder mehreren der vorgenannten Polyisocyanate, einzusetzen. Ferner ist es möglich, beliebige Mischungen der vorgenannten Polyisocyanate zu verwenden. Bevorzugt werden die technisch leicht zugänglichen Polyisocyanate, z.B. das 2,4-und 2,6-Toluylendiisocyanat, sowie beliebige Gemische dieser Isomeren ( = "TDI"), insbesondere die Polyisocyanate vom MDI-Typ, das sind 4,4-und/oder 2,4-Diphenylmethandiisocyanat und/oder Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate (= modifizierte Polyisocyanate), insbesondere solche modifizierten Polyisocyanate, die sich vom 2,4-und/oder 2,6-Toluylendiisocyanat oder vom 4,4-und/oder 2,4-Diphenylmethandiisocyanat ableiten.

Monoisocyanate können anteilig, z.B. bis zu höchstens 30 Gew.-%, bezogen auf das Gewicht des Polyisocyanates, mitverwendet werden.

Die Komponente H) wird in einer Menge von 70 bis 130 Mol-%, bezogen auf die zur Umsetzung der in den Komponenten A), B) und C) enthaltenen aktiven Wasserstoffatome stöchiometrisch erforderliche Menge angewendet. Bevorzugt wird das Polyisocyanat in einer Menge von 95 bis 115 Mol-%, besonders bevorzugt in einer Menge von ca. 100 Mol-%, bezogen auf die zur Umsetzung der in den Komponenten A), B) und C) enthaltenen aktiven Wasserstoffatome stöchiometrisch erforderlichen Menge eingesetzt. Bei Verwendung von weniger als der stöchiometrisch erforderlichen Menge Polysiocyanat nehmen Festigkeit und Wasserbeständigkeit der Intumeszenzmassen zunehmend ab. Wird dagegen mehr als die stöchiometrisch erforderliche Menge an Polyisocyanat angewendet, so werden reaktionsfähige Intumeszenzmassen erhalten, was z.B. für Vernetzungsreaktionen z.B. der Intumeszenzmasse mit dem beschichteten Material oder für spätere Härtungsreaktion vorteilhaft sein kann. Falls das Komponentengemisch A-G Wasser enthalten sollte, ist eine der Wassermenge äquivalente Menge Polyisocyanat zusätzlich einzusetzen.

Die erfindungsgemäßen Intumeszenzmassen sind vorzugsweise massiv oder weisen zumindest nur eine geringfügige Porosität auf. Ihre Dichte liegt im Bereich von 0,6 bis 1,8, bevorzugt im Bereich von 0,9 bis 1,6 g/cm³, besonders bevorzugt 1,1 bis 1,5 g/cm³.

Durch die Wahl der Mengen an Katalysator läßt sich die Erhärtungscharakteristik und "Topfzeit" der Intumeszenzmassen und ihre physikalischen Eigenschaften, z.B. ihre Viskosität einstellen, so daß diese Massen sowohl bei Temperaturen von etwa 0° als auch bei Temperaturen von z.B. 60° C durch schnelle Reaktion eine solche Viskosität gewinnen, daß sie noch in Schichtdicken von bis zu 30 mm auch auf senkrecht stehende Wände aufgebracht bzw. bei langsamerer Reaktion noch leicht in offene oder geschlossene Formen eingebracht werden können. Da sich durch die Wahl der Komponenten und der Mengen, in denen diese Komponenten eingesetzt werden, die Aushärtungszeiten der erfindungsgemäßen Intumeszenzmassen bei Raumtemperatur so einstellen lassen, daß sie bei Raumtemperatur im Bereich von einigen Sekunden bis einigen Minuten liegen, lassen sich die Massen in nahezu beliebiger Dicke in einem Arbeitsgang in Form einer Schicht aufbringen oder in offenen oder geschlossenen, beheizten oder unbeheizten Formen zu Formkörpern verarbeiten. Sie beginnen bei Temperaturen zwischen 200 und 700°C zu expandieren, je nach Zusammensetzung und Art der Erhitzung um beispielsweise 50 bis 1000 Vol.-%. Ihre bei Beflammung entstehenden Carbonisierungsprodukte haben eine überraschend hohe Isolierfähigkeit und Festigkeit.

Die erfindungsgemäßen Intumeszenzmassen können zur Herstellung von Beschichtungen und von Formkörpen z.B. Konstruktionselementen, verwendet werden. Die Erfindung betrifft daher auch dei Verwendung der erfindungsgemäßen Intumeszenzmassen zur Herstellung von eine Schutzwirkung gegen Feuer und Hitze aufweisenden Beschichtungen und Formkörpern und die so erhaltenen Beschichtungen bzw. beschichteten Substrate und Formkörper.

Derartige Beschichtungen können z.B. auf Platten aus Stahl, Aluminium, Silikaten, Gips, Holz-oder Mineralwolle, ferner auf Mauern, Trägern, Stützen, Paneelen, Blechen, Maschendraht, Streckmetall oder sonstigen Substraten aufgebracht werden. Das Aufbringen kann durch Aufsprühen, Aufstreichen oder Begießen erfolgen, gegebenenfalls unter Schutzgas wie z.B. Stickstoff, Argon oder CO₂, gegebenenfalls unter Feuchtigkeit ausschließenden Bedingungen (z.B. getrocknetes Schutzgas).

Die Herstellung der Formkörper kann durch Gießen der erfindungsgemäßen Intumeszenzmassen in offene oder geschlossene Formen, gegebenenfalls unter Zufuhr von warmen und kalten Hilfsgasen und/oder Wärme erfolgen. Insbesondere Konstruktionselemente können auch durch mechanische Bearbeitung der aus den erfindungsgemäßen Intumeszenzmassen hergestellten Rohlinge oder Halbzeuge hergestellt werden. Bei den Halbzeugen kann es sich z.B. um massive Blöcke oder Platten, Schaumstoffe, Profile oder Beschichtungen handeln, aus denen z.B. durch Schneiden, Pressen, Stanzen, aber auch durch Warmverformen, Verschweißen, Beschichten oder Verkleben Endprodukte erhalten werden. Die Formkörper und Halbzeuge eignen sich insbesondere zur Anwendung im Schiff-, Fahrzeug-, Maschinen-, Hoch-, Raffinerie- und Tiefbau, beim Bau von Tunneln, Hochhäusern, chemischen Anlagen sowie in der Elektrotechnik. Ein erheblicher Bedarf ist insbesondere dort, wo mit dem Auftreten von Wasser (z.B. Schwitzwasser, Regenwasser, Grundwasser) und im Brandfalle mit dem Auftreten von hohen Temperaturen, starker Flammenerosion und Löschwasser zu rechnen ist.

Die Herstellung der erfindungsgemäßen Intumeszenzmassen erfolgt in der Weise, daß man Komponente H) mit den, vorzugsweise in Form eines vorformulierten Gemisches vorliegenden Komponenten A) bis G) umsetzt. Die Umsetzung wird bei Temperaturen von -10 bis +100° C, vorzugsweise bei +10 bis 45° C vorgenommen. Die Herstellung kann auch so vorgenommen werden, daß man alle Einzelkomponenten oder bereits vorgemischte Kombinationen von Einzelkomponenten miteinander vermischt, z.B. die pulverförmigen Anteile ganz oder zum Teil den ganz oder teilweise zusammengemischten flüssigen Anteilen zusetzt oder den Katalysator als Einzelkomponente dem Reaktionsgemisch gesteuert zuführt. Die erfindungsgemäßen Intumeszenzmassen werden in Form der Reaktionsgemische vorzugsweise unmittelbar vor ihrer Verwendung zum Beschichten oder zur Herstellung von Formkörpern hergestellt.

Durch Kombination der erfindungsgemäßen Intumeszenzmassen mit geschäumten oder massiven, anorganischen oder organischen Zuschlagstoffen oder Deckschichten bzw. Tragschichten, z.B. Polystyrolschaum, Polyurethanschaum, Phenoplasten, Aminoplasten oder Kies, Beton, Blähton, Harnstoff-oder Phenolharzschäumen, Schaumglas, Glasfasern, Holz, Mineralwolle oder Bims können Verbundwerkstoffe mit speziellen Intumeszenzeigenschaften erhalten werden. Die Herstellung von mit Fasern, Drähten, Geweben, Strängen oder Vliesen aus organischen oder anorganischen Materialien verstärkten Beschichtungen oder Konstruktionselementen oder deren Verwendung als Bestandteile in Mehrschicht-oder Sandwichaufbauten ist ebenfalls möglich. Die erfindungsgemäßen Intumeszenzmassen können auch in Kombination mit anderen Intumeszenzmassen verwendet werden, wobei durch sandwich-artige Kombination von Intumeszenzmaterialien bzw. Feuerschutzmaterialien verschieden abgestufter Wirkungscharakteristik spezielle Schutzeffekte erzielbar sind.

Bei den, in den folgenden Beispielen angegebenen Teilen und Prozenten handelt es sich, sofern nichts anderes angegeben ist, um Gewichtsteile bzw. Gewichtsprozente.

In den Beispielen wurden folgende Komponenten verwendet:

Komponente A (Polyetherpolyole):

A1) Glycerin-gestarteter Ethylenoxid-propylenoxid-polyether, OH-Zahl 251, Gehalt an Propylenoxideinheiten: 1,5 Gew.-%; Funktionalität: ca. 3.

A2) Sorbit-gestarteter Ethylenoxidpolyether, OH-Zahl 300, Funktionalität: ca. 5.

A3) Ethylendiamin-gestarteter Ethylenoxid-propylenoxidpolyether, OH-Zahl 202, Gehalt an Propylenoxideinheiten: 9 Gew.-%, Funktionalität: ca. 4.

Komponente B (Polyesterpolyole):

B1) Polyester aus 6 Mol Adipinsäure, 1 Mol Pentaerythrit, 0,25 Mol Glycerin, 5,25 Mol Ethylenglykol; OH-Zahl 256, Säurezahl 4,1, Viskosität bei 75° C: 436 cP, Funktionalität: ca. 4.

B2) Polyester aus 1 Mol Pentaerythrit, 6 Mol Adipinsäure, 0,3 Mol Glycerin, 4,2 Mol Ethylenglykol und 1 Mol Neopentylglykol; OH-Zahl 277, Säurezahl 4,8, Funktionalität: ca. 4.

Komponente C (mindestens 2 OH-Gruppen aufweisende phosphorhaltige Polyole):

C1) $(C_2H_5O-)_2PO-CH_2-N(-C_2H_4OH)_2$ (technisches Produkt; P-Gehalt: ca. 11,8 Gew.-%)

C2) $(CH_3O-)_2PO-CH_2-N(-C_3H_7OH)_2$ (technisches Produkt; P-Gehalt: ca. 11,6 Gew.-%)

Komponente D (inerte Trockenmittel):

D1) entwässerter Zeolith (Baylith T-Pulver)

Komponente E (dehydratisierbare Füllstoffe):

E1) Technisches Aluminiumhydroxid (Füllstoff-Qualität; mittlere Korngröße 20 bis 25 $\mu$m; BET-Oberfläche 0,2 m²/g).

E2) Bei 45° C bis zur Gewichtskonstanz getrockneter hydratisierter Gips (mittlere Korngröße 45 $\mu$m, BET-Oberfläche 0,15 m²/g).

Komponente F (sonstige anorganische Füllstoffe):

F1) pyrogene Kieselsäure (Thixotropiemittel):
F2) Titandioxid-Weißpigment
F3) technisches Oleylamin (Tensid)
F4) Calciumcarbonat (technisch, Füllstoffqualität)
F5) Bortrioxid (technisch, Füllstoffqualität)
F6) Zinkborat (technisch, Füllstoffqualität)
F7) Calciumsilikat (technisch, Füllstoffqualität, Wollastonit)

Komponente G (Katalysatoren):

G1) Bis-$\beta$-dimethylamino-diethylether
G2) Zinnoctoat
G3) Dibutylzinndilaurat

Komponente H (Polyisocyanat):

H1) 4,4'-Diisocyanato-diphenylmethan (technisches Gemisch erhalten durch Phosgenierung von Anilin-Formaldehyd-Kondensationsprodukten; NCO-Gehalt 30 Gew.-%; ®Desmodur 44 V 40)
H2) Technisches Toluylendiisocyanat (NCO-Gehalt etwa 4 Gew.-%; Desmodur T 80)

Allgemeine Herstellungsvorschrift für die in den nachfolgenden Beispielen verwendeten Intumeszenzmassen:

Die Komponenten A bis G werden bei Raumtemperatur miteinander gemischt. Die Mischung wird 10 Minuten im Wasserstrahlvakuum entgast. Die Mischung wird dann innerhalb von 12 Sekunden unter Rühren mit der Komponente H versetzt.

Die Reaktionsmischung wird unmittelbar zur Beschichtung eines frisch gesandstrahlten Stahlblechs oder zur Herstellung von Formkörpern verwendet. Die exotherme Reaktion und die Härtung der Intumeszenzmasse ist nach etwa 15 Minuten abgeschlossen.

Für die Versuche in der Brandkammer werden die frisch gesandstrahlten Stahlbleche (6 mm Dicke, Maße 50 x 50 cm) mit dem Reaktionsgemisch beschichtet (Schichtdicken: 1 cm und 2 cm). Als Brandkammer wird eine Kleinbrandkammer in Anlehnung an DIN 4102 verwendet, in die die zu prüfenden Platten eingebaut werden. Die Beflammung erfolgt so, daß die Temperatur in der Brandkammer innerhalb der ersten 10 Minuten auf 1000° C, innerhalb der folgenden 50 Minuten gleichmäßig auf etwa 1200° C steigt und dann in etwa konstant bleibt (etwa Hydrocarbonfeuer-Bedingungen). Es werden die Temperaturen in der Mitte und nahe den 4 Ecken auf der dem Feuer abgewandten Seite der Stahlbleche gemessen. Die Messungen werden nach verschiedenen Beflammungszeiten (30, 60, 90 und 120 Minuten) vorgenommen. Aus den für die einzelnen Beflammungszeiten erhaltenen 5 Meßwerten wird ein für die jeweilige Beflammungszeit erhaltener Temperaturmittelwert ($T_{min..}$) errechnet.

Außerdem wird nach dem Abkühlen des Brandraumes an den ausgebauten Platten die maximale Höhe des Intumeszenzschaumes (IS) gemessen.

Zur Verdeutlichung der negativen Einflüsse von Intumeszenzhilfsmitteln des Standes der Technik wurden folgende Zusätze vergleichsweise geprüft:
Z1 handelsübliches Melaminpyrophosphat
Z2 Salz aus 1 Mol Melamin und 0,75 Mol $H_3PO_4$
Z3 Neutrales Ethylendiaminphosphat
Z4 sekundäres Ammoniumphosphat.

Die Zusammensetzungen der in den Beispielen 1 bis 18 beschriebenen Intumeszenzmassen und die mit diesen Intumeszenzmassen erreichte Brandschutzwirkung (Temperaturen auf der dem Feuer abgewandten Seite der Stahlbleche) und die Höhe des erhaltenen Intumeszenzschaumes sind in der folgenden Tabelle 1 zusammengestellt.

## Tabelle 1

| Bsp. Komponenten [Gew.-Tle] | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|
| A1 | | | | | | | 1700 | 1700 | 1200 | 500 | 500 | 500 | 500 | 500 | | 300 | | |
| A2 | | | | | | | | 1700 | | | | | | | 500 | 200 | | |
| A3 | | | | | | | | | | | | | | | | | | |
| B1 | 500 | 500 | 500 | | 1700 | 1000 | | | | | | | | | | 700 | 1000 | 1000 |
| B2 | 500 | 500 | 500 | 1700 | 1700 | 700 | | | | | | | | | 1000 | 300 | | 1000 |
| C1 | 500 | 500 | 500 | 1700 | 1700 | 1700 | 1700 | 1700 | 1700 | 500 | 500 | 500 | 500 | 500 | 500 | 250 | 500 | 500 |
| C2 | | | | | | | | | | | | 500 | 500 | 500 | | 250 | | |
| D1 | | | | 250 | 250 | 250 | 250 | 250 | 250 | 200 | 200 | 200 | 200 | 200 | 200 | 150 | 200 | 200 |
| E1 | 1000 | 1000 | 1000 | 3400 | 3400 | 3400 | 3400 | 3400 | 3400 | 2350 | 2350 | 2350 | 1880 | 1880 | 1700 | 1800 | 1850 | 1850 |
| E2 | 1000 | 1000 | 1000 | | | | | | | | | | | | | 250 | | |
| F1 | | | | | | | | | | 50 | 50 | 50 | 20 | 60 | 10 | 30 | 10 | |
| F2 | 30 | 30 | 30 | 102 | 102 | 100 | 100 | 100 | 100 | 100 | | | | | | | | |
| F3 | 20 | 20 | 20 | 68 | 68 | 50 | 50 | 50 | 50 | | | | | | | | | |
| F4 | | | | | | | | | | | | | | | | | | |
| F5 | | | | | | | | | | | | | 470 | 470 | | | | |
| F6 | | | | | | | | | | | | | | | 500 | 500 | 500 | 200 |
| F7 | | | | | | | | | | | | | | | 500 | | | 200 |
| G1 | | | | | | | | | 5 | 5 | 5 | 5 | | | | | | 5 |
| G2 | | | | | | | | | | | | | | | 2 | | | |
| G3 | | | | | | | | 300 | 300 | | | | | | | | | |
| Z1 | | | | | 300 | 300 | 300 | 300 | 300 | | | | | | | | | |
| Z2 | 150 | 75 | | | | | | | | | | | | | | | | |
| Z3 | | | | | | | | | | | | | | | | | | |
| Z4 | | | | | | | | | | | | | | | | | | |
| H1 | 715 | 715 | 715 | 2380 | 2380 | 2380 | 2380 | 2380 | 2380 | 1620 | 1620 | 1620 | 1620 | 1000 | 1710 | 700 | 1620 | 1620 |
| H2 | | | | | | | | | | | | | | 397 | | 627 | | |
| T30 (°C) | 140 | 123 | 119 | 85 | 105 | 121 | 101 | 125 | 118 | 85 | 160 | 160 | 161 | 158 | 160 | 141 | 152 | 160 |
| T60 | 485 | 410 | 300 | 111 | 171 | 198 | 115 | 200 | 181 | 110 | 165 | 240 | 170 | 165 | 170 | 158 | 120 | 160 |
| T90 | >500 | >500 | 348 | 111 | 300 | 240 | 125 | 390 | 320 | 135 | 240 | 315 | 260 | 240 | 230 | 230 | 250 | 260 |
| T120 | >500 | >500 | 358 | 170 | 405 | 362 | 210 | >500 | 430 | 150 | 285 | 385 | 328 | 350 | 350 | 350 | 280 | 300 |
| IF (cm) | 6 | 5 | 8 | 15 | 11 | 9 | 11 | 8 | 9 | 13 | 7 | 6 | 6 | 6 | 8 | 6 | 7 | 7 |

Erläuterungen zu den in Tabelle 1 zusammengestellten Daten:

Zu Beispielen 1 bis 3:

Die Dicke der Intumeszenzmassen-Schicht beträgt 2 cm. Da kein Trockenmittel (D) mitverwendet wird, weisen die Intumeszenzmassen eine gewisse Porosität auf und die Dichten der Massen liegen unter 1 g/cm³. Die Beispiele 1 und 2 entsprechen Intumeszenzmassen des Standes der Technik, Beispiel 3 beschreibt eine erfindungsgemäße Intumeszenzmasse. Aus den bei den Brandkammerversuchen erhaltenen Daten geht die verbesserte Brandschutzwirkung der erfindungsgemäßen Beschichtung eindeutig hervor.

Zu den Beispielen 4 und 5:

Die Dicke der Intumeszenzmassen-Schicht beträgt 2 cm; infolge der Anwesenheit des Trockenmittels (D) werden nahezu massive Beschichtungen mit Dichten über 1 g/cm³ erhalten. Beispiel 5 erläutert eine zum Stand der Technik gehörende Intumeszenzmasse, Beispiel 4 eine erfindungsgemäße Intumeszenzmasse. Aus den bei den Brandkammerversuchen erhaltenen Ergebnissen geht die verbesserte Brandschutzwirkung der unter Verwendung der erfindungsgemäßen Intumeszenzmasse erzeugten Beschichtung eindeutig hervor.

Zu den Beispielen 6 bis 10:

Die Dicke der Intumeszenzmassen-Schicht beträgt 2 cm. Die Beispiele 6 bis 10 zeigen die Bedeutung der erfindungsgemäß zu verwendenden Kombination der Komponenten A und B für die Brandschutzwirkung der Intumeszenzmassen. In den Beispielen 7 und 8 wird zur Herstellung der Polyurethane als P-freies Polyol nur ein Polyesterpolyol verwendet während in den Beispielen 6, 9 und 10 Kombinationen von einem Polyesterpolyol und einem Polyetherpolyol verwendet werden. Beispiele 6 und 9 zeigen außerdem die Wirkung dieser Kombination der Komponenten A und B in Intumeszenzmassen die übliche Intumeszenzhilfsmittel enthalten, Beispiele 7, 8 und 10 die Wirkung der erfindungsgemäßen Kombination der Komponenten A und B in den erfindungsgemäßen treibmittelfreien Intumeszenzmassen. Aus den bei den Brandversuchen erhaltenen Ergebnissen geht eindeutig hervor, daß mit den erfindungsgemäßen Intumeszenzmassen Beschichtungen erhalten werden, die eine wesentlich verbesserte Brandschutzwirkung aufweisen. An den Beispielen 9 und 10 wird sichtbar, wie die ausgezeichnete Brandschutzwirkung der mit der Intumeszenzmasse des Beispiels 10 erhaltenen Beschichtung durch Zugabe einer geringen Menge eines üblichen Intumeszenzhilfsmittels verschlechtert wird.

Zu den Beispielen 10 bis 12:

Es werden verschiedene Aktivatoren G verwendet und zugleich die Schichtdicken der Beschichtungen von 2 cm (Beispiel 10) über 1 cm (Beispiel 11) auf 0,5 cm (Beispiel 12) herabgesetzt. Aus den bei den Brandversuchen erhaltenen Daten ist ersichtlich, daß auch mit Schichtdicken von nur 0,5 cm ein ausgezeichneter Brandschutz erreicht wird.

Mit der in Beispiel 11 beschriebenen Rezeptur wird außerdem in getrennten Versuchen der Einfluß der Aktivatormenge auf die Topfzeit des hergestellten Polyurethans untersucht. Bei diesen Versuchen wird der Prozentgehalt des Aktivators, bezogen auf das Gesamtgewicht der Komponenten A bis G abgeändert; es werden die Zeiten bestimmt, dei bei einer Temperatur der Komponenten von 20° C (vor der Vermischung) nach 10-sekündigem Vermischen der Komponenten bei Raumtemperatur bis zur klebfreien Erstarrung der Intumeszenzmassen vergehen. Das Ergebnis dieser Versuche ist in der folgenden Tabelle 2 zusammengestellt.

### Tabelle 2

| Beispiel 11 | a) | b) | c) | d) | e) |
|---|---|---|---|---|---|
| % G2 | 0,0 | 0,1 | 0,2 | 0,3 | 0,5 |
| Zeit (sec.) | 125 | 48 | 29 | 21 | 9 |

Aus Tabelle 2 geht hervor, daß die Reaktivität der Ansätze, z.B. gemäß Beispiel 10 bis 12 so stark beschleunigt werden kann, daß sie, mit einer MehrkomponentenSpritzvorrichtung auf eine Unterlage gesprüht und dort sofort nach kurzem Verlauf zum Erstarren gebracht werden können. Das wiederum bedeutet, daß sich durch die Wahl der Aktivator-Menge beliebig dicke Schutzbeschichtungen in einem Arbeitsgang auf ein Substrat aufbringen lassen.

Das Raumgewicht solcher Beschichtungen liegt etwa bei 1,3 g/cm$^3$. Beim Einbringen in eine geschlossene Form können Raumgewichte von 1,6 g/cm$^3$ an entsprechenden Platten oder sonstigen Formkörpern erzielt werden. Die Kugeldruckhärte liegt bei 105 N/mm$^2$, die Kerbschlagzähigkeit bei 2,6 kJ/m$^2$.

Bringt man die Aktivator-freie Intumeszenzmasse in eine auf 80° C beheizte Form ein, so ist die Masse nach ca. 2,5 Minuten erstarrt und entformbar. Bringt man die Masse dagegen in eine gekühlte (15 bis 25° C) Form ein, so kann sie daraus nach ca. 3 Minuten entformt werden, ist dann zwar klebfrei aber noch flexibel. Das so erhaltene Formteil läßt sich dann nahezu beliebig weiter verformen, beispielsweise zu Rohrhalbschalen oder sonstigen Profilen. Wenn die zur Weiterverformung verwendeten Formen oder die entstehenden Formteile beheizt werden, ist das zuvor noch flexible Material innerhalb von 1 bis 15 Minuten erstarrt und auch in der Wärme formstabil. Bei 15°C bis Raumtemperatur vergehen etwa 30 bis 60 Minuten bis zur endgültigen Durchhärtung. So lassen sich sehr leicht Formkörper und Profile, z.B. Gehäuseteile, herstellen, deren Brandschutzwirkung durch Beispiel 10 bis 12 verdeutlicht worden ist.

Zu den Beispielen 13 und 14:

Die Dicke der Intumeszenzmassenschicht beträgt in diesen Beispielen 1 cm; die mit den in diesen Beispielen verwendeten Intumeszenzmassen erzeugten Beschichtungen, zeigen bei guter Brandschutzwirkung eine deutlich festere, mechanisch stabilere Intumeszenzschaumstruktur.

Zu den Beispielen 15 bis 19:

Die Dicke der Intumeszenzmassen-Schicht in diesen Beispielen beträgt 1 cm. In diesen Beispielen wird untersucht, inwieweit die Verwendung verschiedener Komponenten-Typen der erfindungsgemäß zu verwendenden Komponenten die Brandschutzwirkung der erfindungsgemäßen Intumeszenzmassen beeinflußt. Aus den bei den Brandversuchen erhaltenen Ergebnissen geht hervor, daß die ausgezeichnete Brandschutzwirkung der erfindungsgemäßen Intumeszenzmassen auch bei Verwendung der verschiedensten Vertreter der erfindungsgemäß zu verwendenden Komponenten erhalten bleibt. In den Beispielen 16 und 18 wird ein relativ fester Intumeszenzschaum erhalten; dies ist auf eine gewisse Keramisierung des Füllstoffs F zurückzuführen. Diese Keramisierung ist ein durchaus erwünschter Effekt, da dieser eine besonders lange Feuerwiderstandsdauer sowie eine gute Oxidations-und Löschwasserbeständigkeit der Schaumschicht bewirkt.

Beispiel 19:

Die Mischung der Komponenten A bis G gemäß Beispiel 11 (b) werden vor dem Vermischen mit Komponente H 90 Teile Chlor-Fluormethan zugesetzt. Das Reaktionsgemisch wird in eine zur Herstellung 2 cm starker Platten bestimmte, geschlossene, auf 45° C beheizte Aluminiumform, die mit einem Wachstrennmittel eingestrichen war so eingedrückt, daß die Form zu etwa 70 % gefüllt war. Nach 15 Minuten wird die Form geöffnet; sie ist nunmehr zu 100 % ausgefüllt und das Formteil hat homogene, glatte Deckschichten und weist im Querschnitt eine sogenannte Integral-Struktur auf, d.h. die Deckschichten sind im wesentlichen massiv, der Kern schwach porös. Das Raumgewicht der Platte liegt bei etwa 1,0 g/cm³. Die Brandschutzwirkung dieser Platte entspricht in etwa der Brandschutzwirkung der gemäß Beispiel 11 hergestellten Beschichtung. Solche aus Intumeszenzmaterial mit Integralstruktur hergestellte Verkleidungselemente können im Flugzeug-oder Fahrzeugbau Anwendung finden.

Beispiel 20:

Die in Beispiel 13 beschriebene Intumeszenzmasse wird in eine aus Silicongummi gefertigte Rohrform (lichter Durchmesser: 2 cm; Wandstärke: 1,5 cm) gefüllt. Das nach 10 Minuten der Form entnommene Rohr wird als Kabelhülle für ein Drehstromkabel verwendet. Um die Brandschutzwirkung dieser Kabelhülle zu untersuchen, wird das durch die Kabelhülle geschützte Drehstromkabel auf einer aus Schamotteplatten gefertigten Kabeltrasse quer durch die für die vorstehend beschriebenen Beflammungsversuche verwendete Kleinbrandkammer geführt. Nach 60 minütigem Beflammen der Kabelhülle ist das Kabel noch kurzschlußfrei.

Beispiel 21:

Mittels eines mobilen Mehrkomponentenmischkopfes, bei dem das Reaktionsgemisch mittels Preßluft zerstäubt wird, werden senkrecht stehende Platten bei Raumtemperatur besprüht; zum Besprühen wird die in Beispiel 11 (d) beschriebene Reaktionsmischung verwendet. Durch Auf-und Abschwenken des Sprühstrahles werden die etwa 80 x 80 cm messenden Platten mit einer zwar ausreichend verlaufenden, aber nicht abtropfenden, sondern schnell härtenden Schicht aus Intumeszenzmasse bedeckt.

Die auf diese Weise mit einer 1 cm dicken Beschichtung versehenen Platten bestanden aus folgenden Substraten:
2 mm-Stahlblech
3 cm Mineralwolle
1 cm Gipskarton
2 mm Aluminium
2 cm Calciumsilikat
5 cm Holzwolle-Zement
1,8 cm Holzpreßspan

Aus den beschichten Platten werden 50 x 50 cm große Platten ausgeschnitten und mit der Beschichtung flammseitig in die bereits früher beschriebene und entsprechend der Einheitstemperaturkurve gemäß DIN 4102 befeuerte Kleinbrandkammer eingebaut.

Nach 60 minütiger Versuchsdauer wurden bei Stahl und Aluminium Rückseiten-Durchschnittstemperaturen von 150° C, bei allen anderen Substraten Rückseiten-Durchschnittstemperaturen unter 100° C gemessen.

Das durch vorstehend beschriebene Beschichtung zugängliche Plattenmaterial kann für den Feuerschutzbau Verwendung finden. Zum Beispiel weisen die mit den erfindungsgemäßen Intumeszenzmassen beschichteten Mineralwoll-oder Calciumsilikat-Platten neben ihrer bekannten Isolierwirkung noch die durch die Beschichtung mit den erfindungsgemäßen Intumeszenzmassen bewirke Langzeitschutzwirkung bei hohen Beflammungstemperaturen auf. Hinzu kommt, daß die Beschichtung mit den erfindungsgemäßen Intumeszenzmassen den Zutritt von Feuchtigkeit zu den Isoliermaterialien unterbindet.

Beispiel 22:

Der in Beispiel 20 beschriebene Brandversuch wird mit einem Drehstromkabel wiederholt, das unmittelbar mit der in Beispiel 21 beschriebenen Sprühtechnik mit dem in Beispiel 21 verwendeten Reaktionsgemisch ummantelt worden war. Auch dieses Kabel war noch nach 60 Minuten Brandeinwirkung kurzschlußfrei.

Beispiel 23:

Es wird eine erste Komponente hergestellt durch Mischung von (die Zahlenangaben sind Gewichtsteile)

100 Polyetherpolyol A1
200 Polyesterpolyol E2
100 phosphorhaltiges Polyol C1
40 Trockenmittel D1
470 Füllstoff E1
1,1 Kieselsäure F1 und
2,0 Katalysator G3.

1 kg/min dieser ersten Komponente, die bei 20° C eine Viskosität von ca. 18.000 cP aufweist, wird einem Mischkopf mit Rührwerkmischtechnik zugeführt. Gleichzeitig wird dem Mischkopf zur Vermischung mit der ersten Komponente eine zweite Komponente bestehend aus 0,53 kg/min eines durch Umsatz mit geringen Wassermengen trimerisierten Hexamethylen-Diisocyanats (letzteres = Desmodur® N der Bayer AG) zugeführt. Das so hergestellte Reaktionsgemisch wird unmittelbar hinter der Mischkammer durch eine mit 12 bar Pressluft arbeitende Sprühdüse versprüht und auf frisch gesandstrahlte Stahlplatten von 50 x 50 x 0,5 cm in einer Schichtdicke von 1 cm aufgebracht. Da das Reaktionsgemisch bei 25° C im Verlaufe von ca. 20 Sek. aushärtet, läßt sich die gewünschte Schichtdicke in einem Arbeitsprozeß auftragen.

Man erhält eine zäh-harte Beschichtung, die wie beschrieben, in der Kleinbrandkammer geprüft wird. Es zeigt sich, daß bei diesen Versuchen auf der dem Feuer abgewandten Plattenseite nach 120 min eine Durchschnittstemperatur von 385° C erreicht wird. Das bedeutet, daß auch die erfindungsgemäße Verwendung aliphatischer Polyisocyanate zu sehr brauchbaren Beschichtungen führt.

## Ansprüche

1. Intumeszenzmassen auf Basis von Umsetzungsprodukten von phosphorhaltigen und phosphorfreien Polyolen und Polyisocyanaten, dadurch gekennzeichnet, daß sie ein beim Vermischen und Umsetzen folgender Komponenten entstehendes Reaktionsgemisch sind, aus:

A) 5 bis 25 Gew.-%, bezogen auf das Gesamtgewicht der Komponenten A bis G, eines Polyetherpolyols mit mindestens 1,75 OH-Gruppen je Molekül und einer OH-Zahl von 150 bis 400;

B) 5 bis 35 Gew.-%, bezogen auf das Gesamtgewicht der Komponenten A bis G, eines Polyesterpolyols mit mindestens 2 OH-Gruppen je Molekül und einer OH-Zahl von 120 bis 400;

5 bis 25 Gew.-%, bezogen auf das Gesamtgewicht der Komponenten A bis G, eines mindestens zwei OH-Gruppen je Molekül enthaltenden, phosphorhaltigen Polyols, dessen Phosphorgehalt zwischen 6 und 21 Gew.-%, vorzugsweise zwischen 10 und 15 Gew.-% liegt, mit der Maßgabe, daß das Gesamtgewicht der Komponenten A + B + C 15 bis 70 Gew.-% des Gesamtgewichts des Reaktionsgemisches ausmacht;

D) 0 bis 10 Gew.-%, bezogen auf das Gesamtgewicht der Komponenten A bis G, eines inerten Trockenmittels;

E) 20 bis 85 Gew.-%, bezogen auf das Gesamtgewicht des Reaktionsgemisches, eines dehydratisierbaren Füllstoffs;

F) 0 bis 30 Gew.-%, bezogen auf das Gesamtgewicht des Reaktionsgemisches, sonstiger anorganischer Hilfs-und Füllstoffe, mit der Maßgabe, daß das Gesamtgewicht der Komponenten D + E + F 20 bis 90 Gew.-%, vorzugsweise 45 bis 70 Gew.-%, bezogen auf das Gesamtgewicht des Reaktionsgemisches beträgt; und

G) 0 bis 3 Gew.-%, bezogen auf das Gesamtgewicht der Komponenten A + B + C, eines Katalysators; und

H) 70 bis 130 Gew.-%, bezogen auf die zur Umsetzung der im Gemisch der Komponenten A, B und C enthaltenen aktiven Wasserstoffatome stöchiometrisch erforderliche Menge, eines Polyisocyanates.

2. Intumeszenzmassen gemäß Anspruch 1, dadurch gekennzeichnet, daß sie ein Reaktionsgemisch sind, dessen Gehalt an
Komponente A) 7 bis 17 Gew.-%,
Komponente B) 15 bis 25 Gew.-%,
Komponente C) 5 bis 15 Gew.-% und
Komponente D) 0,5 bis 5 Gew.-%,
alle Gew.-% bezogen auf das Gesamtgewicht der Komponenten A bis G, beträgt, und das Gesamtgewicht der Komponenten A + B + C 30 bis 45 Gew.-% des Gesamtgewichtes des Reaktionsgemisches ausmacht;

dessen Gehalt an Komponente E) 40 bis 55 Gew.-% und an Komponente F) 0 bis 12 Gew.-%, beide Gew.-% bezogen auf das Gesamtgewicht des Reaktionsgemisches, beträgt und das Gesamtgewicht der Komponenten D + E + F 45 bis 70 Gew.-%, bezogen auf das Gesamtgewicht des Reaktionsgemisches, ausmacht;

dessen Gehalt an Komponente G) 0 bis 1,5 Gew.-%, bezogen auf das Gesamtgewicht der Komponenten A + B + C, und an Komponente H) 95 bis 115 Gew.-% beträgt, bezogen auf die zur Umsetzung der im Gemisch der Komponenten A, B und C enthaltenen aktiven Wasserstoffatome stöchiometrisch erforderliche Menge.

3. Verwendung eines beim Vermischen und Umsetzen folgender Komponenten entstehenden Reaktionsgemisches aus:

A) 5 bis 25 Gew.-%, bezogen auf das Gesamtgewicht der Komponenten A bis G, eines Polyesterpolyols mit mindestens 1,75 OH-Gruppen je Molekül und einer OH-Zahl von 150 bis 400;

B) 5 bis 35 Gew.-%, bezogen auf das Gesamtgewicht der Komponenten A bis G, eines Polyesterpolyols mit mindestens 2 OH-Gruppen je Molekül und einer OH-Zahl von 150 bis 400;

C) 5 bis 25 Gew.-%, bezogen auf das Gesamtgewicht der Komponenten A bis G, eines mindestens zwei OH-Gruppen je Molekül enthaltenden, phosphorhaltigen Polyols, dessen Phosphorgehalt zwischen 6 und 21 Gew.-%, vorzugsweise zwischen 10 und 15 Gew.-% liegt, mit der Maßgabe, daß das Gesamtgewicht der Komponenten A + B + C 15 bis 70 Gew.-% des Gesamtgewichts des Reaktionsgemisches ausmacht;

D) 0 bis 10 Gew.-%, bezogen auf das Gesamtgewicht der Komponenten A bis G, eines inerten Trockenmittels;

E) 20 bis 85 Gew.-%, bezogen auf das Gesamtgewicht des Reaktionsgemisches, eines dehydratisierbaren Füllstoffs;

F) 0 bis 30 Gew.-%, bezogen auf das Gesamtgewicht des Reaktionsgemisches, sonstiger anorganischer Hilfs-und Füllstoffe, mit der Maßgabe, daß das Gesamtgewicht der Komponenten D + E + F 20 bis 90 Gew.-%, vorzugsweise 45 bis 70 Gew.-%, bezogen auf das Gesamtgewicht des Reaktionsgemisches beträgt; und

G) 0 bis 3 Gew.-%, bezogen auf das Gesamtgewicht der Komponenten A + B + C, eines Katalysators; und

H) 70 bis 130 Gew.-%, bezogen auf die zur Umsetzung der im Gemisch der Komponenten A, B und C enthaltenen aktiven Wasserstoffatome stöchiometrisch erforderliche Menge, eines Polyisocyanates, zur Herstellung von eine Schutzwirkung gegen Feuer und Hitze aufweisenden Beschichtungen und Formkörpern.

4. Verwendung gemäß Anspruch 3, dadurch gekennzeichnet, daß ein Reaktionsgemisch eingesetzt wird,

dessen Gehalt an

Komponente A) 7 bis 17 Gew.-%,

Komponente B) 15 bis 25 Gew.-%,

Komponente C) 5 bis 15 Gew.-% und

Komponente D) 0,5 bis 5 Gew.-%,

alle Gew.-% bezogen auf das Gesamtgewicht der Komponenten A bis G, beträgt, und das Gesamtgewicht der Komponenten A + B + C 30 bis 45 Gew.-% des Gesamtgewichtes des Reaktionsgemisches ausmacht;

dessen Gehalt an Komponente E) 40 bis 55 Gew.-% und an Komponente F) 0 bis 12 Gew.-%, beide Gew.-% bezogen auf das Gesamtgewicht des Reaktionsgemisches, beträgt und das Gesamtgewicht der Komponenten D + E + F 45 bis 70 Gew.-%, bezogen auf das Gesamtgewicht des Reaktionsgemisches, ausmacht;

dessen Gehalt an Komponente G) 0 bis 1,5 Gew.-%, bezogen auf das Gesamtgewicht der Komponenten A + B + C, und an Komponente H) 95 bis 115 Gew.-% beträgt, bezogen auf die zur Umsetzung der im Gemisch der Komponenten A, B und C enthaltenen aktiven Wasserstoffatome stöchiometrisch erforderliche Menge.

5. Gemäß Ansprüchen 3 und 4 erhaltene, eine Schutzwirkung gegen Feuer und Hitze aufweisende Beschichtungen, beschichtete Substrate und Formkörper.